# EUROPEAN PATENT APPLICATION

(11) **EP 4 712 187 A1**
(43) Date of publication of application: **18.03.2026**
(21) Application number: 25739097.1
(22) Date of filing: 09.01.2025
(51) Int. Cl.: H01M 10/04, H01M 10/0583

(54) **APPARATUS FOR MANUFACTURING SECONDARY BATTERY AND METHOD FOR MANUFACTURING SECONDARY BATTERY**

(30) Priority: 12.01.2024 KR 20240005148
(71) Applicant: LG Energy Solution, Ltd., Seoul 07335 (KR)
(72) Inventor: HA, Jung Hoon, Daejeon 34122 (KR); PARK, Jae Sung, Daejeon 34122 (KR)
(74) Representative: Plasseraud IP
(86) International application number: PCT/KR2025/000521
(87) International publication number: WO 2025/150932

(57) **Abstract**

Disclosed herein relates to a secondary battery manufacturing apparatus including: a folding device configured to manufacture an electrode assembly, the electrode assembly comprising a plurality of unit cells stacked in a first direction and a separator sheet wound to cover an upper surface, a bottom surface, a first side, and a second side of each of the plurality of unit cells; a cutting device configured to cut a first side part of the separator sheet to form a first cutting region extending in a second direction on the separator sheet; and a taping device configured to attach a tape connecting two portions of the separator sheet separated by the first cutting region to the separator sheet.

## Description

### [Technical Field]

The present disclosure relates to a secondary battery manufacturing apparatus and a method for manufacturing a secondary battery.

This application claims the benefit of Korean Patent Application No. 10-2024-0005148, filed on January 12, 2024, the disclosure of which is incorporated herein by reference.

### [Background]

Unlike primary batteries, secondary batteries can be charged and discharged a plurality times. Secondary batteries are widely used as an energy source in a variety of wireless devices, including handsets, laptops, and cordless vacuum cleaners. Typically, a secondary battery consists of an electrode assembly with stacked electrodes and separators embedded in a pouch-like battery case. If a gas trap occurs in the electrode assembly, an inactive area is formed on the surface of the electrode and lithium is precipitated during charging and discharging.

### [Summary]

### [Technical Problem]

The technical challenge of the present disclosure is to provide a secondary battery manufacturing apparatus and a method for manufacturing secondary batteries.

### [Technical Solution]

To address the above challenges, the technical ideas of the present disclosure provide a secondary battery manufacturing apparatus including: a folding device configured to manufacture an electrode assembly, the electrode assembly comprising a plurality of unit cells stacked in a first direction and a separator sheet wound to cover an upper surface, a bottom surface, a first side, and a second side of each of the plurality of unit cells; a cutting device configured to cut a first side part of the separator sheet to form a first cutting region extending in a second direction on the separator sheet; and a taping device configured to attach a tape connecting two portions of the separator sheet separated by the first cutting region to the separator sheet.

In exemplary embodiments, the first cutting region extends continuously in the second direction from one end of the separator sheet to the other end of the separator sheet to penetrate the separator sheet in the second direction.

In exemplary embodiments, the cutting device includes a cutter blade configured to cut the separator sheet.

In exemplary embodiments, the cutting device includes a laser cutter configured to cut the separator sheet with a laser beam.

In exemplary embodiments, the cutting device is configured to cut a second side part of the separator sheet to form a second cutting region extending in the second direction on the separator sheet, wherein the taping device is configured to connect two portions of the separator sheet separated by the second cutting region with the tape.

In exemplary embodiments, the second cutting region extends continuously in the second direction from one end of the separator sheet to the other end of the separator sheet to penetrate the separator sheet in the second direction.

In exemplary embodiments, the tape surrounds the separator sheet and is attached to the first side part and the second side part of the separator sheet.

In exemplary embodiments, the tape includes a first tape for fixing two portions of the separator sheet separated by the first cutting region and a second tape for fixing two portions of the separator sheet separated by the second cutting region.

In exemplary embodiments, the device further includes a tape cutting device configured to form a through-hole communicating with the first cutting region of the separator sheet on the tape.

To address the above challenges, the technical ideas of the present disclosure provide a secondary battery manufacturing method including: manufacturing an electrode assembly, wherein the electrode assembly comprises a plurality of unit cells stacked in a first direction and a separator sheet wound to cover an upper surface, a bottom surface, a first side, and a second side of each of the plurality of unit cells; cutting a first side part of the separator sheet to form a first cutting region extending in a second direction on the separator sheet; and connecting the two portions of the separator sheet separated by the first cutting region with a tape.

In exemplary embodiments, the first cutting region extends continuously in the second direction from one end of the separator sheet to the other end of the separator sheet to penetrate the separator sheet in the second direction.

In exemplary embodiments, forming the first cutting region includes cutting the separator sheet while moving the cutter blade in the second direction.

In exemplary embodiments, forming the first cutting region comprises cutting the separator sheet while moving a laser cutter irradiating a laser beam in the second direction.

In exemplary embodiments, cutting a second side part of the separator sheet to form a second cutting region extending in the second direction on the separator sheet, wherein connecting with the tape comprises connecting the two portions of the separator sheet separated by the second cutting region with the tape.

In exemplary embodiments, the separator sheet comprises a center part overlapped with the plurality of unit cells in the first direction, the first side part and the second side part of the separator sheet are not overlapped with the plurality of unit cells in the first direction, in the separator sheet, the first side part and the second side part are spaced apart in a third direction with the center part interposed therebetween, and the second direction and the third direction are perpendicular to each other.

### [Advantageous Effects]

According to exemplary embodiments of the present disclosure, the separator sheet of the electrode assembly has a cutting region that functions as a gas passage between the outer space on the outside of the separator sheet and the inner space of the separator sheet, so that the gas in the electrode assembly can be quickly discharged through the four side parts of the electrode assembly during the degassing process, and the occurrence of gas traps in the electrode assembly can be prevented.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a block diagram illustrating a secondary battery manufacturing apparatus according to exemplary embodiments of the present disclosure.
FIG. 2a is a perspective view illustrating an electrode assembly according to exemplary embodiments of the present disclosure.
FIG. 2b is a cross-sectional view illustrating the electrode assembly shown in FIG. 2a.
FIG. 3a is a perspective view illustrating an electrode assembly according to exemplary embodiments of the present disclosure.
FIG. 3b is a cross-sectional view illustrating the electrode assembly shown in FIG. 3a.
FIG. 4a is a perspective view illustrating an electrode assembly according to exemplary embodiments of the present disclosure.
FIG. 4b is a cross-sectional view illustrating the electrode assembly shown in FIG. 4a.
FIG. 5 is a schematic diagram illustrating a secondary battery including an electrode assembly according to exemplary embodiments of the present disclosure.
FIG. 6a is a perspective view illustrating an electrode assembly according to exemplary embodiments of the present disclosure.
FIG. 6b is a cross-sectional view illustrating an electrode assembly according to exemplary embodiments of the present disclosure.
FIG. 7 is a perspective view illustrating an electrode assembly according to exemplary embodiments of the present disclosure.
FIG. 8 is a plan view schematically illustrating a folding device according to exemplary embodiments of the present disclosure.
FIG. 9 is a plan view schematically illustrating a cutting device according to exemplary embodiments of the present disclosure.
FIG. 10 is a plan view schematically illustrating a cutting device according to exemplary embodiments of the present disclosure.
FIG. 11 is a plan view schematically illustrating a taping device according to exemplary embodiments of the present disclosure.
FIG. 12 is a block diagram illustrating a secondary battery manufacturing apparatus according to exemplary embodiments of the present disclosure.
FIG. 13a is a perspective view illustrating an electrode assembly according to exemplary embodiments of the present disclosure.
FIG. 13b is a cross-sectional view illustrating the electrode assembly shown in FIG. 13a.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

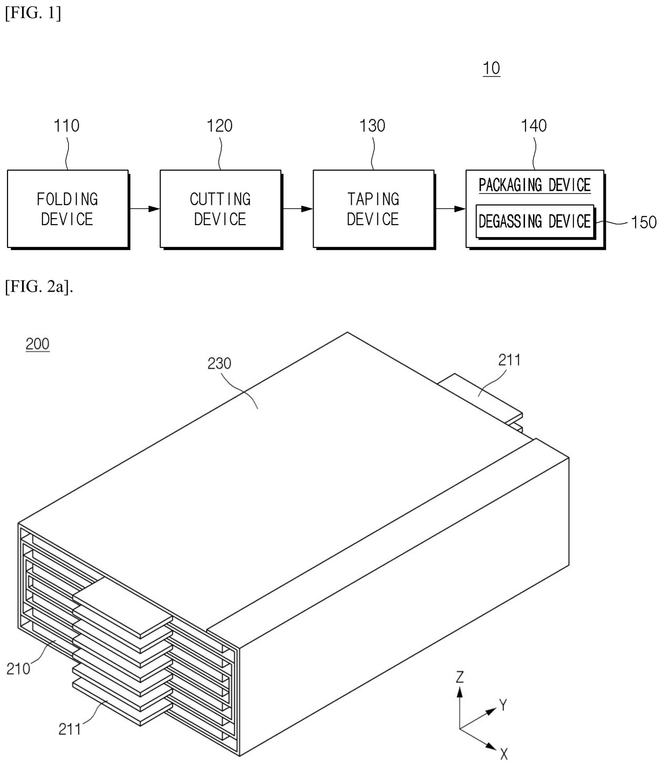

FIG. 1 is a block diagram illustrating a secondary battery manufacturing apparatus 10 according to exemplary embodiments of the present disclosure.

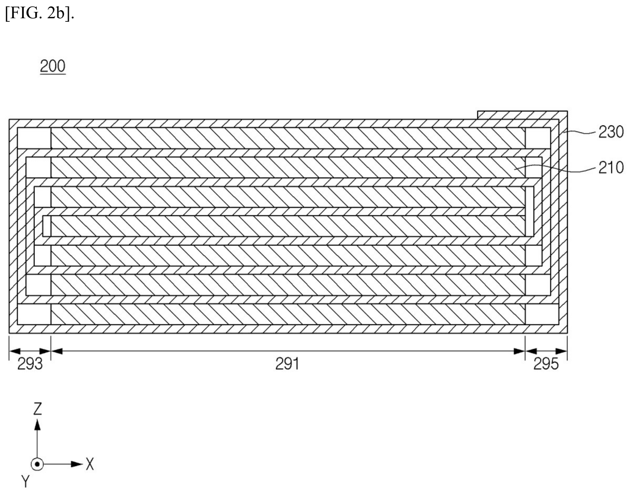

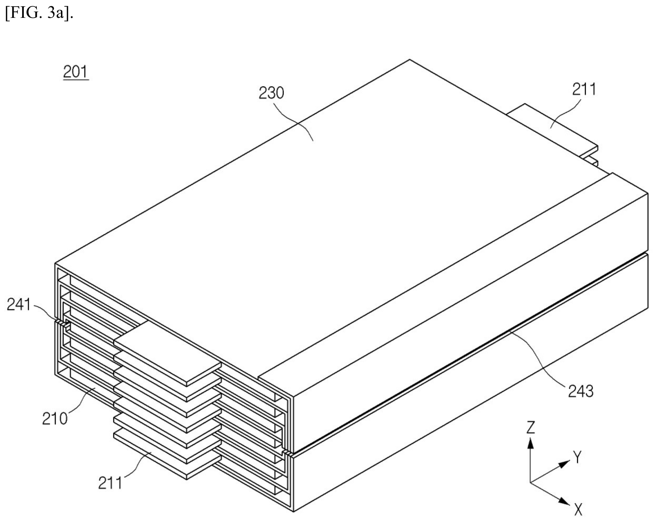

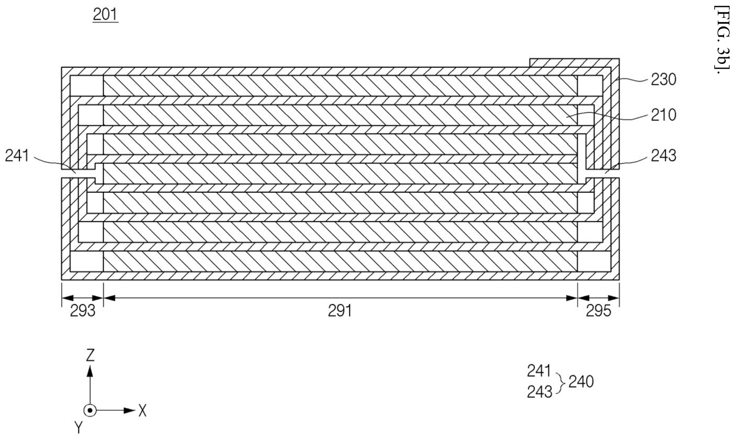

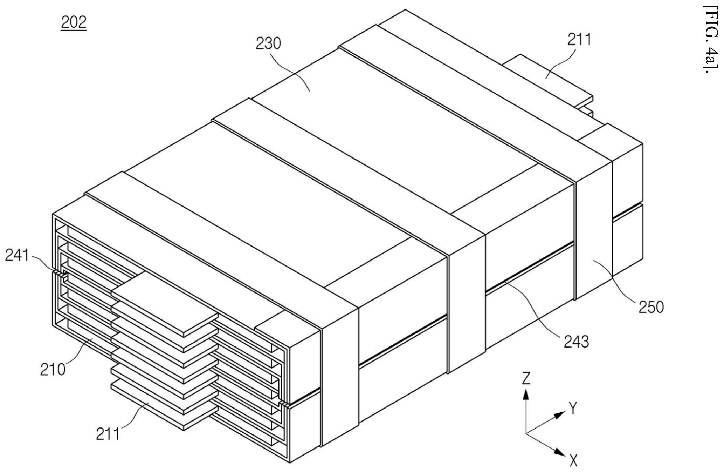

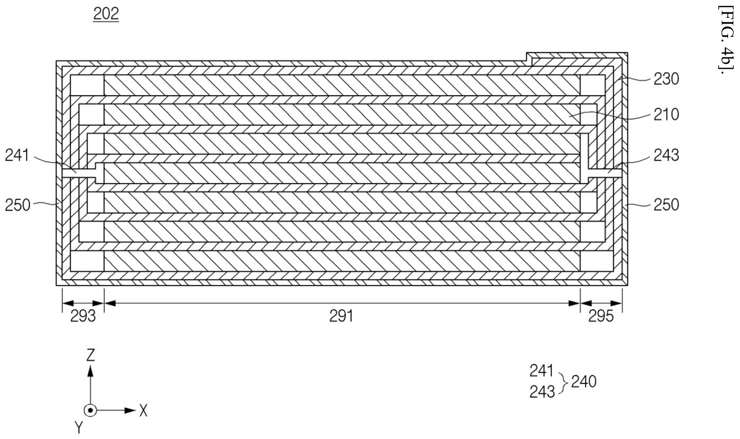

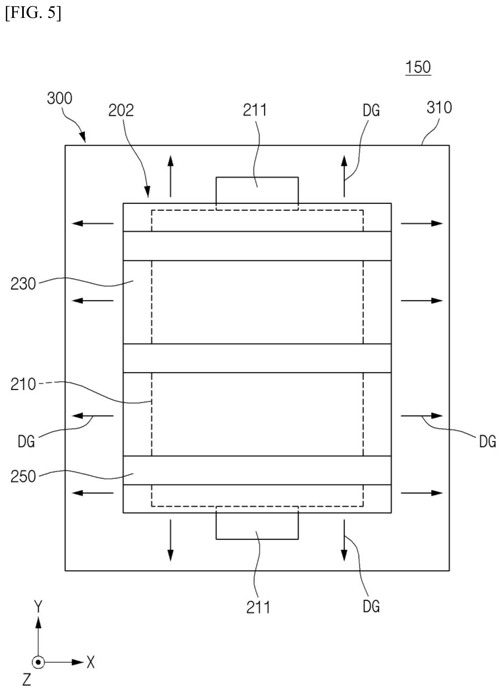

FIGS. 2a through 5 are drawings illustrating methods of manufacturing a secondary battery according to exemplary embodiments of the present disclosure. Specifically, FIG. 2a is a perspective view illustrating an electrode assembly according to exemplary embodiments of the present disclosure, FIG. 2b is a cross-sectional view illustrating the electrode assembly shown in FIG. 2a, FIG. 3a is a perspective view illustrating an electrode assembly according to exemplary embodiments of the present disclosure, and FIG. 3b is a cross-sectional view illustrating the electrode assembly shown in FIG. 3a, FIG. 4a is a perspective view illustrating an electrode assembly according to exemplary embodiments of the present disclosure, FIG. 4b is a cross-sectional view illustrating the electrode assembly shown in FIG. 4a, and FIG. 5 is a schematic diagram illustrating a secondary battery including an electrode assembly according to exemplary embodiments of the present disclosure.

Referring to FIGS. 1 through 5, the secondary battery manufacturing apparatus 10 may include a folding device 110, a cutting device 120, a taping device 130, and a packaging device 140.

Referring to FIGS. 2a and 2b, the folding device 110 can perform a stack-folding process to manufacture a stack-folding type electrode assembly 200. The stack-folding type electrode assembly 200 may include a plurality of unit cells 210 stacked in a vertical direction (e.g., Z direction), and a separator sheet 230 wound to surround each of the plurality of unit cells 210. The stack-folding type electrode assembly 200 may have a short axis parallel to a first horizontal direction (e.g., the X direction) and a long axis parallel to a second horizontal direction (e.g., the Y direction). In other words, a length along the first horizontal direction (e.g., the X direction) of the stack-folding type electrode assembly 200 may be less than a length along the second horizontal direction (e.g., the Y direction) of the stack-folding type electrode assembly 200.

The individual unit cells 210 may comprise a secondary battery. The individual unit cells 210 may be a laminate with at least one positive electrode, at least one separator, and at least one negative electrode stacked in a vertical direction (e.g., Z direction). The positive electrode may include a positive electrode current collector and a positive electrode active material. The negative electrode may include a negative electrode current collector and a negative electrode active material. Individual unit cells 210 may include an electrode tab 211 connected to at least one positive electrode and/or at least one negative electrode.

The individual unit cells 210 may include bi-cells or monocells. A bi-cell may have a stacked structure in which the two outermost electrodes are of the same type, such as positive electrode/separator/negative electrode/separator/positive electrode, positive electrode/separator/negative electrode/separator/positive electrode/separator/negative electrode/separator/positive electrode, negative electrode/separator/positive electrode/separator/negative electrode, negative electrode/separator/positive electrode/separator/negative electrode/separator/positive electrode/separator/negative electrode, etc. A monocell can have a stacked structure where the two outermost electrodes are of different types, such as positive electrode/separator/negative electrode, positive electrode/separator/negative electrode/separator/positive electrode/separator/negative electrode, etc.

The unit cell 210 may have a generally flat plate shape extending in a first horizontal direction (e.g., X direction) and a second horizontal direction (e.g., Y direction). The unit cell 210 may have an upper surface and a bottom surface that are opposed in a vertical direction (e.g., Z direction), a first side and a second side that are opposed in a first horizontal direction (e.g., X direction), and a front and a rear surface that are opposed in a second horizontal direction (e.g., Y direction). Electrode tabs 211 may be provided on the front and/or rear surface of the unit cell 210. The upper surface and bottom surface of the unit cell 210 may be planes extending in a first horizontal direction (e.g., X direction) and a second horizontal direction (e.g., Y direction), respectively, and may contact the separator sheet 230. The unit cell 210 may have a short axis parallel to the first horizontal direction (e.g., the X direction) and a long axis parallel to the second horizontal direction (e.g., the Y direction). In other words, the length along the first horizontal direction (e.g., the X direction) of the unit cell 210 may be less than the length along the second horizontal direction (e.g., the Y direction) of the unit cell 210.

The separator sheet 230 may be a single sheet. The separator sheet 230 may be wound to cover a first side, a second side, an upper surface, and a bottom surface of each of the plurality of unit cells 210. The front and rear surfaces of the individual unit cells 210 may not be covered by the separator sheet 230. The separator sheet 230 may include a center part 291 superimposed in a perpendicular direction (e.g., Z-direction) to the plurality of unit cells 210, a first side part 293 on one side of the plurality of unit cells 210, and a second side part 295 on the other side of the plurality of unit cells 210. A center part 291 of the separator sheet 230 may include portions of the separator sheet 230 spaced apart in a vertical direction (e.g., Z-direction) with the plurality of unit cells 210 in between. The first side part 293 and the second side part 295 of the separator sheet 230 may not overlap the plurality of unit cells 210. The first side part 293 and the second side part 295 of the separator sheet 230 may be spaced apart in a first horizontal direction (e.g., the X direction) with the center part 291 in between. The first side part 293 of the separator sheet 230 may include segments of the separator sheet 230 superimposed in the first horizontal direction (e.g., the X direction), and the second side part 295 of the separator sheet 230 may include segments of the separator sheet 230 superimposed in the first horizontal direction (e.g., the X direction).

Referring to FIGS. 3a and 3b, the cutting device 120 may receive a stack-folding type electrode assembly 200 from the folding device 110 and perform a cutting process on the separator sheet 230 of the stack-folding type electrode assembly 200 to form a cutting region 240 on the separator sheet 230. The cutting device 120 may cut a side part of the separator sheet 230 to form the cutting region 240 on the side part of the separator sheet 230. The cutting region 240 may be formed at the same height as at least one of the plurality of unit cells 210 in a vertical direction (e.g., Z direction).

In exemplary embodiments, the cutting device 120 may cut the first side part 293 of the separator sheet 230 to form a first cutting region 241 on the first side part 293 of the separator sheet 230. The first cutting region 241 may extend continuously in a second horizontal direction (e.g., Y direction) from one end of the separator sheet 230 to the other end of the separator sheet 230 to penetrate the separator sheet 230 in a second horizontal direction (e.g., Y-direction). Through the first cutting region 241, a gas passage may be formed between an outer space on the outside of the separator sheet 230 and an inner space enclosed by the separator sheet 230. With the first cutting region 241 formed on the first side part 293 of the separator sheet 230, a portion of the separator sheet 230 that is above the first cutting region 241 and a portion of the separator sheet 230 that is below the first cutting region 241 may be physically completely separated.

In exemplary embodiments, the cutting device 120 may cut the second side part 295 of the separator sheet 230 to form a second cutting region 243 on the second side part 295 of the separator sheet 230. The second cutting region 243 may extend continuously in a second horizontal direction (e.g., a Y direction) from one end of the separator sheet 230 to the other end of the separator sheet 230 to penetrate the separator sheet 230 in a second horizontal direction (e.g., a Y direction). Through the second cutting region 243, a gas passage may be formed between an outer space on the outside of the separator sheet 230 and an inner space enclosed by the separator sheet 230. With the second cutting region 243 formed on the second side part 295 of the separator sheet 230, a portion of the separator sheet 230 that is above the second cutting region 243 and a portion of the separator sheet 230 that is below the second cutting region 243 may be physically completely separated.

Referring to FIGS. 4a and 4b, the taping device 130 may receive an electrode assembly 201 with the cutting process completed and perform a taping process in which the portions of the separator sheet 230 separated by the cutting process are fixed with a tape 250.

In exemplary embodiments, the taping device 130 may attach a tape 250 to an outer surface of the separator sheet 230 to surround the separator sheet 230. A plurality of tapes 250 spaced apart from each other in the long axis direction (e.g., Y direction) of the electrode assembly 202 may be attached to the separator sheet 230. The individual tapes 250 may surround the separator sheet 230, and may be attached to a first part and a second part of the separator sheet 230. The individual tapes 250 may have a looped shape that extends to surround the separator sheet 230. The individual tapes 250 may be attached to each of the two portions of the separator sheet 230 separated by the first cutting region 241 to fix the two portions of the separator sheet 230 separated by the first cutting region 241, and may be attached to each of the two portions of the separator sheet 230 separated by the second cutting region 243 to fix the two portions of the separator sheet 230 separated by the second cutting region 243.

Referring to FIG. 5, the packaging device 140 may receive an electrode assembly 202 after the taping process is completed, and may perform a feeding process to receive the electrode assembly 202 into a battery case 310, an electrolyte injection process to inject an electrolyte into the battery case 310, a charging and discharging process for the electrode assembly 202, a degassing process to remove internal gases within the electrode assembly 202, and a sealing process to seal the battery case 310. The battery case 310 may be a pouch with a compartment in which the electrode assembly 202 is stored. The packaging device 140 may manufacture a secondary battery 300 with the electrode assembly 202 stored within the battery case 310.

The packaging device 140 may include a degassing device 150 configured to perform a degassing process. The degassing device 150 may include a vacuum chamber and a support for supporting an electrode assembly 202 accommodated within the vacuum chamber. The degassing device 150 can depressurize an interior space of the vacuum chamber, thereby removing gas from the electrode assembly 202.

For the stack-folding type electrode assembly according to a comparative example, the gas is discharged to the outside during the degassing process through two side parts (e.g., front and rear) of the electrode assembly that are not covered by the separator sheet.

According to exemplary embodiments of the present disclosure, the separator sheet 230 of the electrode assembly 202 has a cutting region 240 that functions as a gas passage between the outer space on the outside of the separator sheet 230 and the inner space of the separator sheet 230, so that the gas DG in the electrode assembly 202 can be quickly discharged through the four side parts of the electrode assembly 202 during the degassing process, and the occurrence of a gas trap in the electrode assembly 202 can be prevented. By preventing the occurrence of gas traps within the electrode assembly 202, the capacity degradation, increased cell resistance, lithium precipitation, etc. caused by gas traps within the electrode assembly 202 can be prevented, and ultimately the reliability of the secondary battery 300 including the electrode assembly 202 can be improved.

In exemplary embodiments, the taping device 130 may be configured to attach a tape 250 including a porous material to the separator sheet 230. If the tape 250 is composed of a porous material to provide a gas passage, gases can also be discharged at the portion to which the tape 250 is attached, and gases within the electrode assembly 202 can be discharged to the outside of the electrode assembly 202 through the cutting region 240 of the separator sheet 230 and the tape 250. For example, the tape 250 may include polyethylene terephthalate (PET), polyethylene (PE), polypropylene (PP), and/or casting polypropylene (CPP).

### (Second embodiment)

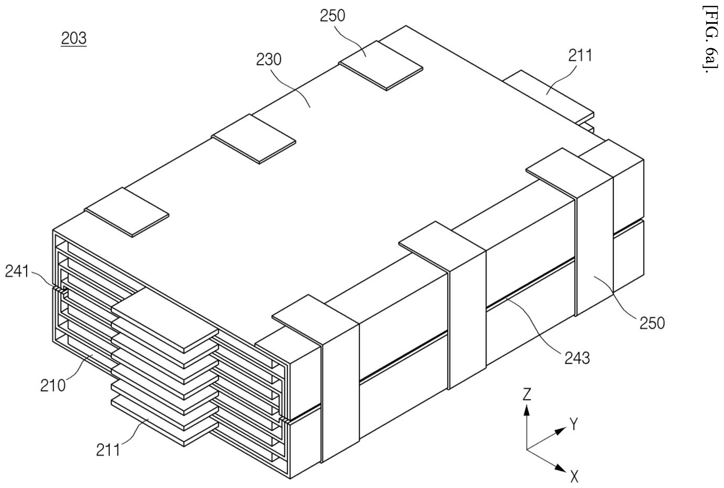

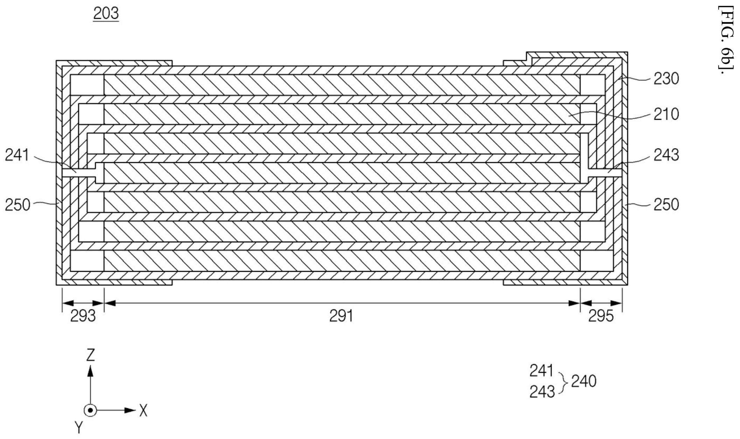

FIG. 6a is a perspective view illustrating an electrode assembly 203 according to exemplary embodiments of the present disclosure. FIG. 6b is a cross-sectional view illustrating an electrode assembly 203 according to exemplary embodiments of the present disclosure.

Referring to FIGS. 1, 6a, and 6b, the taping device 130 may attach a tape 250 to each of the first side part 293 and the second side part 295 of the separator sheet 230. The tape 250 attached to the first side part 293 of the separator sheet 230 may be referred to as the first tape, and the tape 250 attached to the second side part 295 of the separator sheet 230 may be referred to as the second tape. The two portions of the separator sheet 230 separated by the first cutting region 241 may be fixed by the first tape, and the two portions of the separator sheet 230 separated by the second cutting region 243 may be fixed by the second tape. The first side part 293 of the separator sheet 230 may be attached with a plurality of first tapes spaced apart from each other in the long axis direction (e.g., Y direction) of the electrode assembly 203, and the two portions of the separator sheet 230 separated by the first cutting region 241 may be fixed by the plurality of first tapes. A plurality of second tapes spaced apart from each other in the long axis direction (e.g., Y-direction) of the electrode assembly 203 may be attached to the second side part 295 of the separator sheet 230, and the two portions of the separator sheet 230 separated by the second cutting region 243 may be fixed by the plurality of second tapes.

### (Third embodiment)

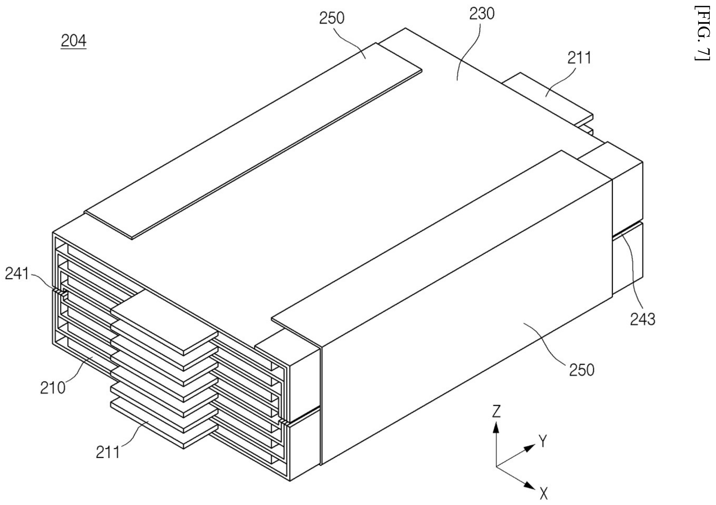

FIG. 7 is a perspective view illustrating an electrode assembly 204 according to exemplary embodiments of the present disclosure.

Referring to FIGS. 1 and 7, the taping device 130 may attach a tape 250 to each of the first side part 293 and the second side part 295 of the separator sheet 230. The tape 250 attached to the first side part 293 of the separator sheet 230 may be referred to as the first tape, and the tape 250 attached to the second side part 295 of the separator sheet 230 may be referred to as the second tape. The two portions of the separator sheet 230 separated by the first cutting region 241 may be fixed by a single first tape. The two portions of the separator sheet 230 separated by the second cutting region 243 may be fixed by a single second tape.

### (Fourth embodiment)

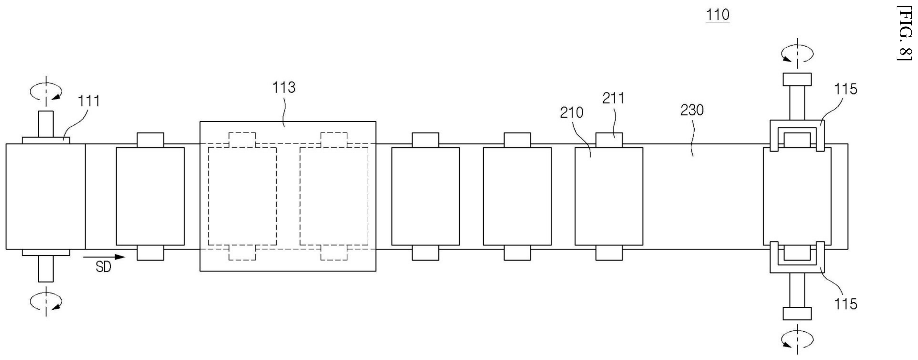

FIG. 8 is a plan view schematically illustrating a folding device 110 according to exemplary embodiments of the present disclosure.

Referring to FIG. 8, the folding device 110 may include a supply roll 111, a laminating device 113, and a winder 115. The supply roll 111 may supply separator sheets 230. The separator sheets 230 provided from the supply roll 111 can be moved in the supply direction SD. When the cell supply part (not shown) supplying the unit cell 210 supplies the unit cell 210 on top of the separator sheet 230, the unit cell 210 may be transferred in the supply direction SD along with the separator sheet 230. The laminating device 113 may be disposed in the travel path of the separator sheet 230, and may apply heat and/or pressure to adhere the unit cells 210 to the separator sheet 230. The laminating device 113 may include a heating part with a heat source for applying heat, and a pressing roll for applying pressure so that the unit cells 210 are pressed onto the separator sheet 230. The winder 115 may be disposed at a distal end of the travel path of the separator sheet 230. The winder 115 may include a gripper for gripping the separator sheet 230 and the unit cell 210, and an actuator for rotating the gripper. The axis of rotation of the gripper may be parallel to the long axis direction of the unit cell 210. The winder 115 can rotate about the axis of rotation while gripping the separator sheet 230 and the unit cell 210 together. The winder 115 can wind the separator sheet 230 such that four surfaces (i.e., an upper surface, a bottom surface, a first side, and a second side) of the individual unit cell 210 are covered by the separator sheet 230. While the winder 115 rotates, a predetermined number of plurality of unit cells 210 may be stacked on top of each other and the separator sheet 230 may be wound to surround each of the plurality of unit cells 210. Once the predetermined number of plurality of unit cells 210 are stacked by the winder 115, a cutter may cut the separator sheet 230.

### (Fifth embodiment)

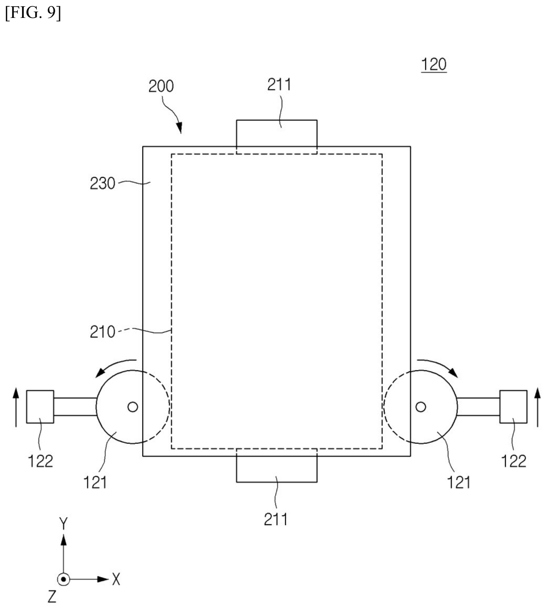

FIG. 9 is a plan view schematically illustrating a cutting device 120 according to exemplary embodiments of the present disclosure.

Referring to FIG. 9 in conjunction with FIGS. 3a and 3b, the cutting device 120 may include a cutter blade 121 and an actuator 122 for moving the cutter blade 121. The cutter blade 121 is rotated by the drive motor, and a cutting region 240 may be formed on the separator sheet 230 while the cutter blade 121 is rotated. The cutter blade 121 may be moved linearly in a second horizontal direction (e.g., a Y direction) by the actuator 122 to cut the separator sheet 230, forming a cutting region 240 that extends linearly in a second horizontal direction (e.g., a Y direction) on the separator sheet 230.

### (Sixth embodiment)

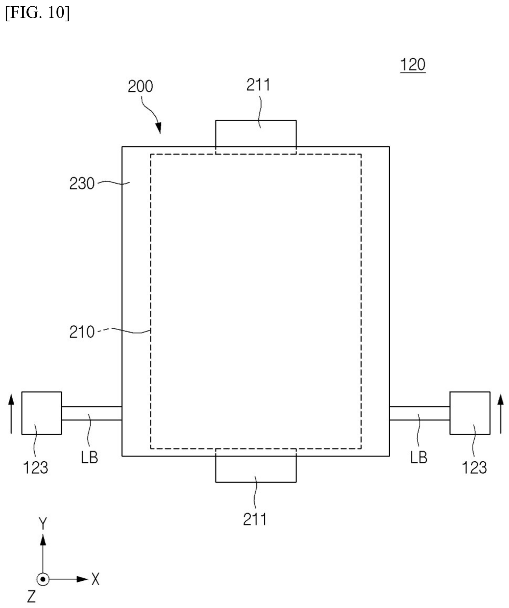

FIG. 10 is a plan view schematically illustrating a cutting device 120 according to exemplary embodiments of the present disclosure.

Referring to FIG. 10 in conjunction with FIGS. 3a and 3b, the cutting device 120 may include a laser cutter 123 configured to cut the separator sheet 230 by irradiating the separator sheet 230 with a laser beam LB. The laser cutter 123 may include a light source and an actuator. The laser cutter 123 may cut the separator sheet 230 in a linear movement in a second horizontal direction (e.g., Y direction) by the actuator, forming a cutting region 240 on the separator sheet 230 that extends linearly in the second horizontal direction (e.g., Y direction).

### (Seventh embodiment)

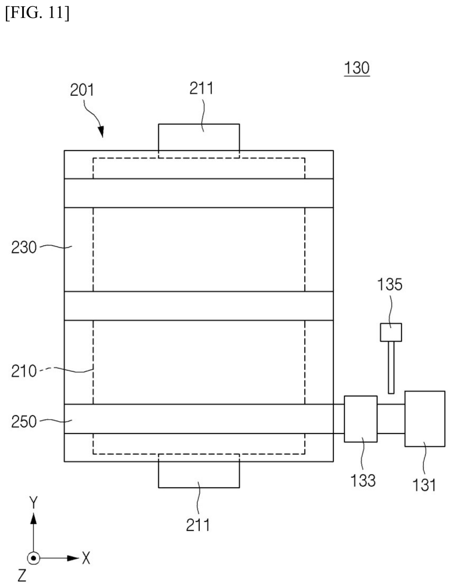

FIG. 11 is a plan view schematically illustrating a taping device 130 according to exemplary embodiments of the present disclosure.

Referring to FIG. 11 in conjunction with FIGS. 4a and 4b, the taping device 130 may attach tape 250 to an outer surface of the separator sheet 230 such that two separate portions of the separator sheet 230 are fixed and connected. The taping device 130 may include a tape feeding device 131 to supply the tape 250, a pressing block 133 to pressurize the tape 250 so that the tape 250 adheres to the separator sheet 230, and a tape cutter 135 to cut the tape 250.

### (Eighth embodiment)

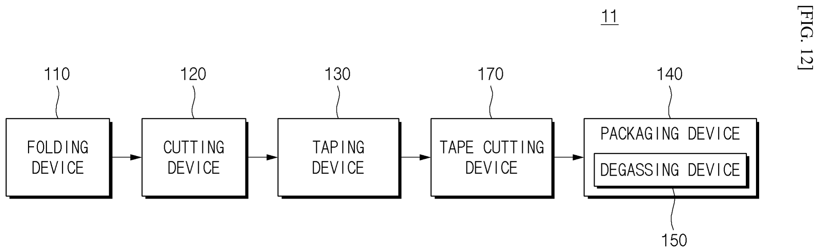

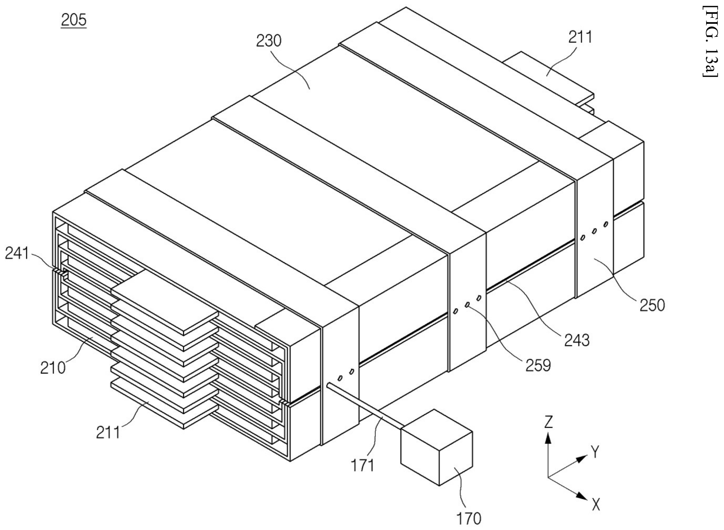

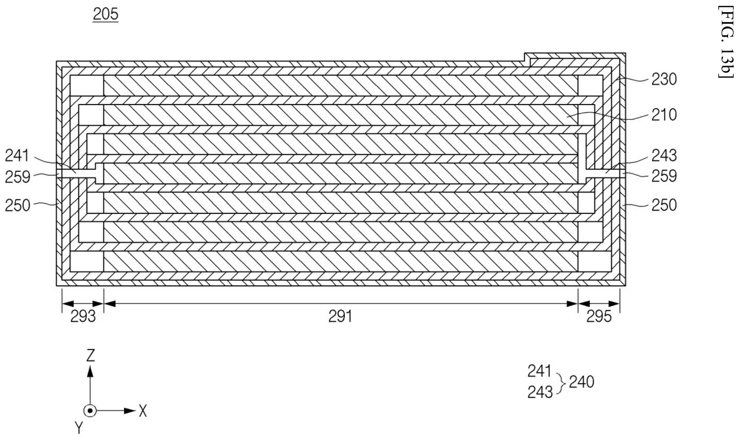

FIG. 12 is a block diagram illustrating a secondary battery manufacturing apparatus 11 according to exemplary embodiments of the present disclosure. FIG. 13a is a perspective view illustrating an electrode assembly 205 according to exemplary embodiments of the present disclosure. FIG. 13b is a cross-sectional view illustrating the electrode assembly 205 shown in FIG. 13a. In the following, duplication of the foregoing description is omitted or shortened.

Referring to FIGS. 12, 13a, and 13b, the secondary battery manufacturing apparatus 11 may include a tape cutting device 170 configured to form a through-hole 259 in a tape 250 attached to the separator sheet 230. The tape cutting device 170 may cut or incise the tape 250, thereby forming a through-hole 259 in the tape 250 that communicates with the cutting region 240 of the separator sheet 230. Through the tape cutting device 170 tape cutting process, the tape 250 can have at least one through-hole 259 that communicates with the first cutting region 241 of the separator sheet 230 and at least one through-hole 259 that communicates with the second cutting region 243 of the separator sheet 230. The through-holes 259 of the tape 250 may provide a gas passage through which gases within the electrode assembly 205 are discharged. In this case, during the degassing process, the gas can also be discharged through the region of the separator sheet 230 covered by the tape 250, thereby allowing the gas within the electrode assembly 205 to be discharged more quickly.

In some exemplary embodiments, the tape cutting device 170 may include a cutter 171 for cutting or incising the tape 250, and an actuator for moving the cutter 171. For example, the cutter 171 may include a needle. In some exemplary embodiments, the tape cutting device 170 may include a laser cutter configured to cut or incise the tape 250 by irradiating a laser beam.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A secondary battery manufacturing apparatus comprising:
a folding device configured to manufacture an electrode assembly, the electrode assembly comprising a plurality of unit cells stacked in a first direction and a separator sheet wound to cover an upper surface, a bottom surface, a first side, and a second side of each of the plurality of unit cells;
a cutting device configured to cut a first side part of the separator sheet to form a first cutting region extending in a second direction on the separator sheet; and
a taping device configured to attach a tape connecting two portions of the separator sheet separated by the first cutting region to the separator sheet.

2. The secondary battery manufacturing apparatus of claim 1, wherein
the first cutting region extends continuously in the second direction from one end of the separator sheet to the other end of the separator sheet to penetrate the separator sheet in the second direction.

3. The secondary battery manufacturing apparatus of claim 1, wherein
the cutting device comprises a cutter blade configured to cut the separator sheet.

4. The secondary battery manufacturing apparatus of claim 1, wherein
the cutting device comprises a laser cutter configured to cut the separator sheet with a laser beam.

5. The secondary battery manufacturing apparatus of claim 1, wherein
the cutting device is configured to cut a second side part of the separator sheet to form a second cutting region extending in the second direction on the separator sheet, wherein
the taping device is configured to connect two portions of the separator sheet separated by the second cutting region with the tape.

6. The secondary battery manufacturing apparatus of claim 5, wherein
the second cutting region extends continuously in the second direction from one end of the separator sheet to the other end of the separator sheet to penetrate the separator sheet in the second direction.

7. The secondary battery manufacturing apparatus of claim 5, wherein
the tape surrounds the separator sheet and is attached to the first side part and the second side part of the separator sheet.

8. The secondary battery manufacturing apparatus of claim 5, wherein
the tape comprises a first tape for fixing two portions of the separator sheet separated by the first cutting region and a second tape for fixing two portions of the separator sheet separated by the second cutting region.

9. The secondary battery manufacturing apparatus of claim 1, further comprising:
a tape cutting device configured to form a through-hole communicating with the first cutting region of the separator sheet on the tape.

10. A secondary battery manufacturing method comprising:
manufacturing an electrode assembly, wherein the electrode assembly comprises a plurality of unit cells stacked in a first direction and a separator sheet wound to cover an upper surface, a bottom surface, a first side, and a second side of each of the plurality of unit cells;
cutting a first side part of the separator sheet to form a first cutting region extending in a second direction on the separator sheet; and
connecting the two portions of the separator sheet separated by the first cutting region with a tape.

11. The secondary battery manufacturing method of claim 10, wherein
the first cutting region extends continuously in the second direction from one end of the separator sheet to the other end of the separator sheet to penetrate the separator sheet in the second direction.

12. The secondary battery manufacturing method of claim 10, wherein
forming the first cutting region comprises cutting the separator sheet while moving the cutter blade in the second direction.

13. The secondary battery manufacturing method of claim 10, wherein
forming the first cutting region comprises cutting the separator sheet while moving a laser cutter irradiating a laser beam in the second direction.

14. The secondary battery manufacturing method of claim 10, further comprising:
cutting a second side part of the separator sheet to form a second cutting region extending in the second direction on the separator sheet, wherein
connecting with the tape comprises connecting the two portions of the separator sheet separated by the second cutting region with the tape.

15. The secondary battery manufacturing method of claim 14, wherein
the separator sheet comprises a center part overlapped with the plurality of unit cells in the first direction,
the first side part and the second side part of the separator sheet are not overlapped with the plurality of unit cells in the first direction,
in the separator sheet, the first side part and the second side part are spaced apart in a third direction with the center part interposed therebetween, and
the second direction and the third direction are perpendicular to each other.
